# EUROPEAN PATENT APPLICATION

(11) **EP 4 836 172 A1**
(43) Date of publication of application: **04.11.2026**
(21) Application number: 24936094.2
(22) Date of filing: 12.12.2024
(51) Int. Cl.: H01M 50/538, H01M 10/04, H01M 50/242, H01M 50/559

(54) **VIBRATION-ADAPTABLE CURRENT COLLECTING PLATE AND CYLINDRICAL BATTERY CELL USING SAME**

(30) Priority: 18.04.2024 KR 20240052346; 30.10.2024 KR 20240151192
(71) Applicant: LG Energy Solution, Ltd., Seoul 07335 (KR)
(72) Inventor: PARK, Jeong Eon, Daejeon 34122 (KR)
(74) Representative: Goddar, Heinz J.
(86) International application number: PCT/KR2024/020278
(87) International publication number: WO 2025/220831

(57) **Abstract**

A collecting plate applicable to a cylindrical battery cell and capable of adapting to vibration is disclosed. The current collecting plate includes: a plate body having a first surface and a second surface facing each other. The plate body includes a first area including a terminal joint where the first surface is bonded to a cap, a can bottom or an electrode terminal; and a second area surrounding the first area and including an electrode joint where the second surface is bonded to an electrode tab of an electrode assembly. The current collecting plate includes: first and second notches provided at the first and second surfaces, respectively, at a boundary area between the first and second areas.

## Description

### [TECHNICAL FIELD]

This application claims the benefit of priority based on Korean Patent Application No. 10-2024-0052346 filed on April 18, 2024, and Korean Patent Application No. 10-2024-0151192 filed on October 30, 2024, entire content disclosed in the document of the patent applications is included as a part of this specification.

The present invention relates to a current collecting plate, and more particularly, to a current collecting plate applicable to a cylindrical battery cell and capable of adapting to vibration.

### [BACKGROUND ART]

The process of manufacturing a battery cell using a cylindrical can includes the steps of: subjecting a metal sheet to deep drawing to form a circular bottom portion and a circular tubular side wall connected thereto; accommodating an electrode assembly therein; and then covering the open end of the circular tubular sidewall with a cap.

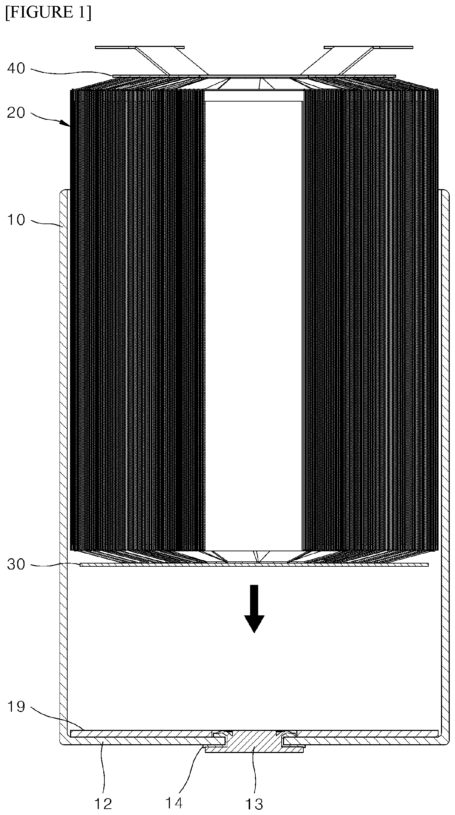

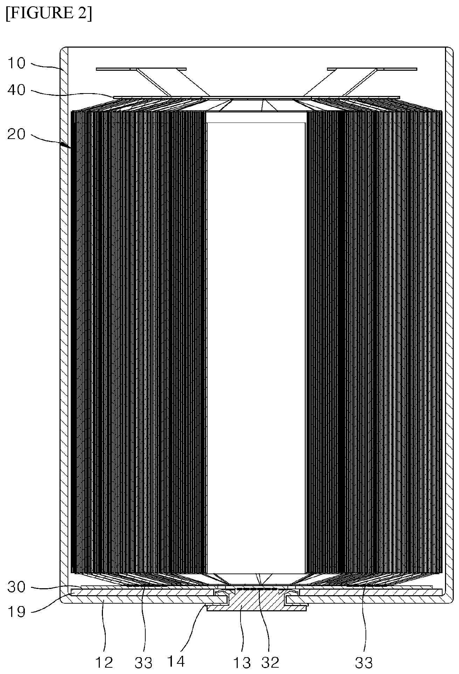

Referring to FIGS. 1 and 2, before accommodating an electrode assembly 20 in a can 10, a current collecting plate 30 may be bonded to the lower axial end of the electrode assembly 20. When the electrode assembly 20 is inserted into the can 10, the current collecting plate 30 faces a bottom member 12 of the cylindrical can.

An electrode terminal 13 is installed at the center of the bottom member 12. The electrode terminal 13 is sealed, insulated from and fixed to the bottom member 12 with a gasket 14 interposed therebetween. With the electrode assembly 20 accommodated in the can 10, an insulator 19 is interposed between the current collecting plate 30 and the bottom member 12 to electrically insulate the current collecting plate 30 of the electrode assembly 20 from the bottom member 12. In this state, the center of the current collecting plate 30 is bonded to the electrode terminal 13.

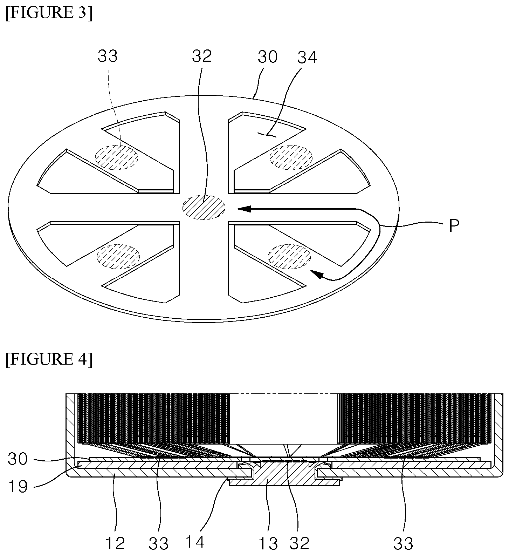

Referring to FIGS. 3 and 4, the periphery of the current collecting plate 30 is provided with an electrode joint 33 bonded to the electrode tab 27 of the electrode assembly 20, and the center of the current collecting plate 30 is provided with a terminal joint 32 bonded to the electrode terminal 13. When the electrode assembly 20 moves relative to the can 10 with the current collecting plate 30 bonded to the electrode tab 27 and the terminal joint 32, the relative positions of the electrode joint 33 and the terminal joint 32 tend to change, and thus, there is a risk that stress may be concentrated on the electrode joint 33 and the terminal joint 32. In particular, when the battery cell is used in an environment where there is a lot of vibration such as in a power tool or a vehicle, there is a risk that the electrode joint 33 and the terminal joint 32 may be damaged due to the relative displacement between the electrode joint 33 and the terminal joint 32.

Considering this, the current collecting plate 30 is provided with a penetrating portion 34 that allows elastic deformation of the current collecting plate 30 when the relative positions of the electrode joint 33 and the terminal joint 32 are about to change. However, due to the penetrating portion 34, even though the straight line distance between the electrode joint 33 and the terminal joint 32 is short, the shortest current path P formed in the current collecting plate 30 between the electrode joint 33 and the terminal joint 32 becomes very long.

That is, the conventional collecting plate has a problem in that the penetrating portion 34 provided to adapt to vibration causes the current path to bypass, thereby increasing internal resistance.

### [DISCLOSURE]

### [TECHNICAL PROBLEM]

In order to solve the above-described problems, it is an object of the present invention to provide a current collecting plate and a battery cell employing the same capable of adapting to vibration without bypassing the current path between the electrode joint and the terminal joint.

It is an object of the present invention to provide a current collecting plate and a battery cell employing the same capable of implementing a vibration-adaptive structure.

It is an object of the present invention to provide a current collecting plate and a battery cell employing the same that minimize the closed area of the current collecting plate, thereby improving impregnation properties and reducing self-weight.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, according to the present invention, when manufacturing a current collecting plate with a plate body having a predetermined thickness, a notch is implemented in the plate body to provide flexibility without blocking the current path.

The plate body has a first surface and a second surface that are opposite to each other.

The plate body has a first area and a second area viewed from thicknesswise direction thereof.

The second area surrounds the first area.

The first area is provided with a terminal joint where the first surface may be bonded to a cap, a can bottom or an electrode terminal.

In some embodiments, the cap may be a component that covers the open end of the can and seals the can.

In some embodiments, the can bottom may be the bottom portion connected to the sidewall of the can. The can bottom may be formed integrally with the sidewall or manufactured as a separate component and then connected to the sidewall.

In some embodiments, the electrode terminal may be provided in the cap.

In some embodiments, the electrode terminal may be provided in the can. Specifically, the electrode terminal may be provided at the bottom of the can.

The second area is provided with an electrode joint where the second surface may be bonded to an electrode tab of an electrode assembly.

A boundary area is present between the first and second areas.

The boundary area is provided with first and second notches formed at the first and second surfaces, respectively.

The first notch may extend in a substantially closed loop shape to surround the first area.

The second notch may extend in a substantially closed loop shape to surround the first area.

One or more first notch and one or more second notch may be provided.

At least one of the first and second notches may be provided in plurality.

Both the first and second notches may be provided in plurality.

The first and second notches may be alternately arranged along a direction approaching from one of the first and second areas toward the other of the first and second areas. For example, the approach direction may correspond to the radial direction of the plate body.

Optionally or additionally, the widthwise center of the first notch and the widthwise center of the second notch may be alternately arranged along the approach direction.

Optionally or additionally, the most deeply recessed bottom of the first notch and the most deeply recessed bottom of the second notch may be alternately arranged along a direction approaching from one of the first and second areas toward the other of the first and second areas.

The shortest distance between first and second inner surfaces defining the first and second notches adjacent along the approaching direction, respectively, is less than a thickness of the plate body.

Optionally or additionally, the first and second notches adjacent along the direction partially overlap each other when viewed in thicknesswise direction of the plate body.

The width of the first notch gradually decreases in depthwise direction.

The cross-sectional shape of the first inner surface defining the first notch when viewed in the extending direction of the first notch is substantially triangular, trapezoidal, semicircular or round.

The width of the second notch gradually decreases in depthwise direction.

The cross-sectional shape of the second inner surface defining the second notch when viewed in the extending direction of the second notch is substantially triangular, trapezoidal, semicircular or round.

The first notch and the second notch may be arranged concentrically.

The plate body may be substantially circular, and the first area may be provided at a center of the plate body.

Each of the first notch and the second notch may be circular and surround the first area.

The second area may be provided with a penetrating portion penetrating the plate body in thicknesswise direction.

The penetrating portion may extend in the radial direction.

The shortest current path between the terminal joint and the electrode joint may be configured in a direction approaching from one of the first and second areas toward the other of the first and second areas.

The shortest current path between the terminal joint and the electrode joint is without a section extending from one of the first and second areas in a direction away from the other of the first and second areas.

The present invention provides a battery cell including the current collecting plate.

The can of the battery cell is provided with a bottom member and a side wall member.

The battery cell includes an electrode assembly accommodated in the can.

The battery cell includes a cap covering an open end of the can with the electrode assembly accommodated in the can.

The battery cell includes an electrode terminal.

The current collecting plate includes: a first surface bonded to the cap, the bottom member of the can or the electrode terminal.

The bonding may be accomplished by welding. The welding may be resistance welding. However, the bonding method is not necessarily limited thereto.

The current collecting plate includes: a second surface electrically connected to an electrode tab provided on one axial side of the electrode assembly.

The electrode joint may be bonded to the electrode tab of the electrode assembly. The bonding may be accomplished by welding. For example, the welding may be laser welding. However, the bonding method is not necessarily limited thereto.

Other bonding methods such as soldering or brazing may also be used.

The battery cell may be cylindrical.

The electrode terminal may be fixed to and insulated from the bottom member.

Optionally, the electrode terminal may be provided in the cap.

### [ADVANTAGEOUS EFFECTS]

The current collecting plate according to the present invention provides flexibility through first and second notches provided at the boundary area between the first and second areas. Accordingly, even when subjected to vibration or shock, tension or stress acting on the bonding area and the collecting plate area connected thereto may be minimized.

The current collecting plate according to the present invention provides flexibility through the first and second notches provided between the electrode connecting portion and the terminal connecting portion such that cracking or fatigue failure is prevented even when subjected to continuous shock or vibration. Consequently, stability may be maintained even with continuous and long-term use.

The current collecting plate according to the present invention provides flexibility through notch formation rather than through a fractured portion, thereby adapting to vibration without bypassing the current path between the electrode joint and the terminal joint.

The current collecting plate according to the present invention may facilitate implementation of a structure capable of adapting to vibration by forming notches in a specific pattern.

According to the present invention, by forming the first and second notches on the first and second surfaces of a plate body having a predetermined thickness, respectively, the current collecting plate may minimize the space occupied in the axial direction of the battery cell while providing sufficient flexibility to absorb vibration.

According to the present invention, by forming a penetrating portion without blocking the gap between the electrode joint and the terminal joint, the current path between the electrode joint and the terminal joint is not bypassed while minimizing the closed area in the current collecting plate, thereby improving impregnation properties and reducing self-weight.

In addition to the advantageous effects described above, specific effects of the present invention will be described further while describing specific details of the present invention.

### [BRIEF DESCRIPTION OF DRAWINGS]

FIG. 1 is a cross-sectional view illustrating a process of inserting an electrode assembly into a can of a battery cell of a comparative example.
FIG. 2 is a cross-sectional view illustrating the electrode assembly accommodated in the can of FIG. 1.
FIG. 3 is a perspective view of a current collecting plate connecting the electrode assembly to a bottom member of the can of FIG. 1.
FIG. 4 is an enlarged cross-sectional view of a current collecting plate bonded to the electrode terminal and electrode assembly of FIG. 1, respectively.
FIG. 5 is a plan view of a current collecting plate according to an embodiment of the present invention.
FIG. 6 is a cross-sectional view taken along the line VI-VI of FIG. 5.
FIG. 7 is an enlarged view of section VII of FIG. 6.
FIG. 8 is an enlarged view of section VIII of FIG. 7.
FIG. 9 is an exploded perspective view of a laminate of the electrode assembly accommodated in the can according to an embodiment of the present invention.
FIG. 10 is a perspective view illustrating the laminate of FIG. 9 wound into a cylindrical jelly-roll shaped electrode assembly.
FIG. 11 is a perspective view illustrating a first current collector plate bonded to an electrode tab provided at one axial end of an electrode assembly facing a bottom of a can.
FIG. 12 is a cross-sectional view illustrating the electrode assembly of FIG. 11 inserted in the can according to a first embodiment with the first current collector plate bonded to the electrode terminal at the bottom of the can.
FIG. 13 is a cross-sectional view illustrating the open end of the can sealed and closed with a cap assembly with an electrode tab provided at the other axial end of the electrode assembly inserted in the can according to the first embodiment connected to the can via a second current collector plate.
FIG. 14 is a cross-sectional view illustrating the electrode assembly of FIG. 11 inserted in the can according to a second embodiment with a first current collector plate bonded to the bottom of the can.
FIG. 15 is a cross-sectional view illustrating the open end of the can sealed and closed with a cap assembly with an electrode tab provided at the other axial end of the electrode assembly inserted in the can according to the second embodiment connected to the cap assembly via a second current collector plate.

### [DESCRIPTION OF REFERENCE NUMERALS]

10: can
11: side wall member
113: beading
115: crimped portion
12: bottom member, bottom surface, bottom
13: first electrode terminal
14: gasket
15: second electrode terminal
16: cap assembly
161: electrode terminal
163: vent
165: current interrupting disk (CID)
167: gasket
168: insulating spacer
17: cap
19: insulator
20: electrode assembly
21: first electrode
22: second electrode
23: metal foil
24: active material layer
25: coated portion
26: non-coated portion
27: electrode tab (notched tab)
28: separator
29: core hollow portion
30: first current collector plate (bottom side collecting plate)
31: plate body
311: first area
312: second area
315: boundary area
317: first surface
318: second surface
32: terminal joint
33: electrode joint
34: penetrating portion
35: first notch
36: second notch
P: current path
40: second current collector plate (open end side current collector plate)
41: inner ring part
42: hole
43: electrode connecting portion
44: can connecting portion

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of another element" or "arranging an element at top (or bottom) of another element" refers to not only "arranging an element to be in contact with upper surface (or lower surface)" but also to "arranging an element above upper surface (or lower surface) of the other element with yet another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

### [COLLECTING PLATE]

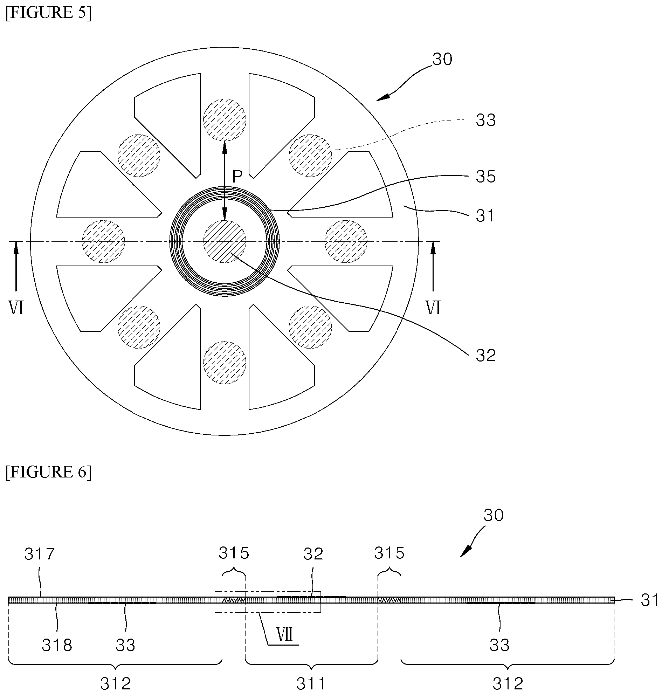

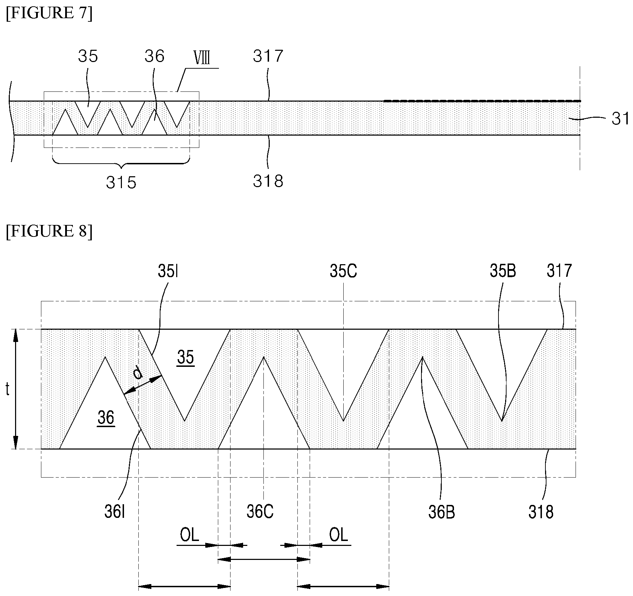

Referring to FIGS. 5 to 8, a current collecting plate 30 according to an embodiment of the present invention is manufactured with a plate body 31 having a predetermined thickness.

The plate body 31 may be manufactured from a metal sheet or meal plate having a predetermined thickness. The metal sheet may be manufactured from copper or an alloy containing copper, or aluminum or an alloy containing aluminum.

The plate body 31 has a form of a plate having a predetermined thickness and has a substantially circular flat plate shape.

The plate body 31 has a first surface 317 and a second surface 318 that are opposite to each other. The first surface 317 faces an electrode terminal 13, which will be described later, and the second surface 318 faces an electrode assembly 20, which will be described later.

The plate body 31 includes a first area 311 and a second area 312 that do not overlap each other when viewed in the thicknesswise direction.

Preferably, the first area 311 may be provided at the center of the plate body 31. However, the first area 311 is not necessarily located at the center of the plate body 31.

The first area 311 may be understood as an area having a circular outer perimeter. However, the outer perimeter of the first area 311 is not necessarily circular.

The second area 312 surrounds the first area 311.

The second area 312 may be understood as a ring-shaped area having a circular inner perimeter and a circular outer perimeter. However, the inner and outer perimeters of the second area 312 are not necessarily circular.

Preferably, the first area 311 and the second area 312 may be arranged concentrically. However, the first area 311 and the second area 312 are not necessarily arranged concentrically.

In the first area 311, provided is a terminal joint 32 where the first surface 317 is bonded to a cap 17, a bottom member 12 of a can 10 or an electrode terminal 13 of a battery cell which will be described later.

In the second area 312, provided is an electrode joint 33 where the second surface 318 is bonded to an electrode tab 27 of an electrode assembly 20 which will be described later.

A boundary area 315 is present between the first area 311 and the second area 312. In the embodiment, the boundary area 315 is present between the first area 311 and the second area 312 in radial direction with respect to the first area 311.

It may be understood that the outer perimeter of the boundary area 315 corresponds to the inner perimeter of the second area 312, and the inner perimeter of the boundary area 315 may correspond to the outer perimeter of the first area 311.

The boundary area 315 is provided with a first notch 35 formed on the first surface 317 and a second notch 36 formed on the second surface 318.

The first notch 35 and the second notch 36 may be formed by etching the first surface 317 and the second surface 318, respectively, to form a shape recessed in the thicknesswise direction.

Each of the first notch 35 and the second notch 36 may extend in a closed loop shape to surround the first area 311.

The closed loop shape may be circular.

One or more first notches 35 and one or more second notches 36 may be provided. In the embodiment, three first notches 35 and three second notches 36 are provided. However, the number of notches is not limited thereto.

The diameters of the plurality of notches 35 and 36 may be different from one another.

The plurality of notches 35 and 36 may be concentric. However, the plurality of notches 35 and 36 are not necessarily concentric.

Each of the first notch 35 and the second notch 36 may have shape having a width gradually decrease in the depthwise direction.

The cross-sectional shape of the first inner surface 35I defining the first notch 35 when viewed in the circumferential direction may be substantially triangular, trapezoidal, semicircular or round. The same may be applied to the second inner surface 36I of the second notch 36.

The first notch 35 and the second notch 36 may be alternately arranged along the radial direction, which is the direction approaching from one of the first area 311 and the second area 312 to the other of the first area 311 and the second area 312.

The widthwise center 35C of each first notch 35 and the widthwise center 36C of each second notch 36 may be alternately arranged along the radial direction.

The most deeply recessed bottom 35B of the first notch 35 and the most deeply recessed bottom 36B of the second notch 36 may be alternately arranged along the radial direction.

The shortest distance d between the first inner surface 35I and the second inner surface 36I of the first notch 35 and the second notch 36, which are adjacent in the radial direction, may be smaller than the thickness t of the plate body 31, which is defined as the distance between the first surface 317 and the second surface 318.

When viewed in the thicknesswise direction of the plate body 31, the first notch 35 and the second notch 36, which are adjacent in the radial direction, may partially overlap (denoted as OL).

According to an embodiment, when manufacturing the current collecting plate 30, notches is implemented in the plate body 31 as described above so as to impart flexibility without blocking the current path P.

In one example, the notch may be formed by pressing with a mold. In another example, the notch may be formed using a laser scan method. However, when the forming process is simple and flexibility may be imparted through the notches as described above, the forming method of the notch is not necessarily limited thereto.

The shortest current path P between the terminal joint 32 and the electrode joint 33 is configured in the radial direction approaching from one of the first area 311 and the second area 312 to the other of the first area 311 and the second area 312.

That is, the shortest current path P may be provided between the terminal joint 32 and the electrode joint 33 in the radial direction with respect to the terminal joint 32.

The shortest current path P between the terminal joint 32 and the electrode joint 33 may extend in a direction in which one of the straight line distance with respect to the terminal joint 32 or the straight line distance with respect to the electrode joint 33 decreases and the other increases. That is, the shortest current path P may not extend in a direction in which both the straight line distance for the terminal joint 32 and the straight line distance for the electrode joint 33 increase or decrease.

The shortest current path P may not exist radially outer than the electrode joint 33.

In the second area 312, a penetrating portion 34 penetrating the plate body 31 in the thicknesswise direction is provided. The penetrating portion 34 may extend in the radial direction. The penetrating portion 34 prevents the current collecting plate 30 from covering the electrode assembly 20 in the axial direction, thereby improving electrolyte impregnation.

In the embodiment, the penetrating portion 34 extends radially with both radially inner and outer sides closed. However, alternatively, the penetrating portion 34 may have open radially outer side.

A plurality of penetrating portions 34 may be arranged to be spaced apart from each other along the circumferential direction.

Two penetrating portions 34 adjacent in the circumferential direction are not interconnected in the circumferential direction between the terminal joint 32 and the electrode joint 33 in the radial direction. Accordingly, the penetrating portion 34 does not block the shortest current path P.

### [BATTERY CELL-FIRST EMBODIMENT]

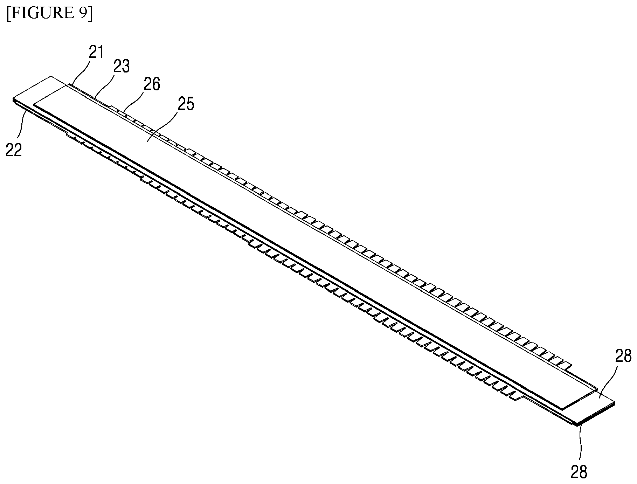

Referring to FIGS. 9 to 13, a battery cell according to a first embodiment includes: an electrode assembly 20; a current collecting plates 30 and 40 electrically connected to the electrode assembly 20; and a can 10 accommodating the electrode assembly 20 and the current collecting plates 30 and 40.

The electrode assembly 20 is manufactured by stacking a first electrode 21, a second electrode 22 and a separator 28 that have a predetermined width and extend in a lengthwise direction in the order of the first electrode 21, the separator 28, the second electrode 22 and the separator 28 and winding the stacked structure into a jelly-roll form around a core axis.

The first electrode 21 may be an anode, and the second electrode 22 may be a cathode, or vice versa.

The first electrode 21 and the second electrode 22 are manufactured in the form of sheets. The electrode sheet is manufactured by applying an active material layer 24 to the surface of a metal foil 23. The electrode sheet has a coated portion 25 where the active material layer 24 is applied, and a non-coated portion 26 without the active material layer 24. The anode sheet has a non-coated portion 26 at first widthwise end thereof, and the cathode sheet has a non-coated portion 26 at a second widthwise end thereof.

The non-coated portion 26 is exposed or protrude in the widthwise direction from the laminate. The non-coated portion 26 itself functions as an electrode tab 27.

The non-coated portion 26 may be provided with notches at a predetermined interval to form notched tabs 27 in the shape of a flag.

In the embodiment, the notched tabs 27 having a shape of an isosceles trapezoid are exemplified. However, the notched tabs 27 may have various shapes such as a semicircle, a semi-ellipse, a triangle, a rectangle, a parallelogram, etc.

In addition, in the embodiment, the notched tabs 27 having the same width and arranged along the lengthwise direction are exemplified. However, the width of the notched tabs may be gradually or stepwisely increased from the core toward the outer circumference.

In addition, in the embodiment, the notched tabs 27 with gradually increasing height from the core toward the outer circumference are exemplified. However, the height of the notched tabs may be a constant or may decrease gradually.

In addition, in the embodiment, exemplified is a structure with notched tabs 27 removed from predetermined sections of the centripetal end and the centrifugal end of the non-coated portion 26. However, it is also apparent that the notched tabs may be not removed from the centripetal end of the non-coated portion, and the notched tabs may be not removed from the centrifugal end of the non-coated portion.

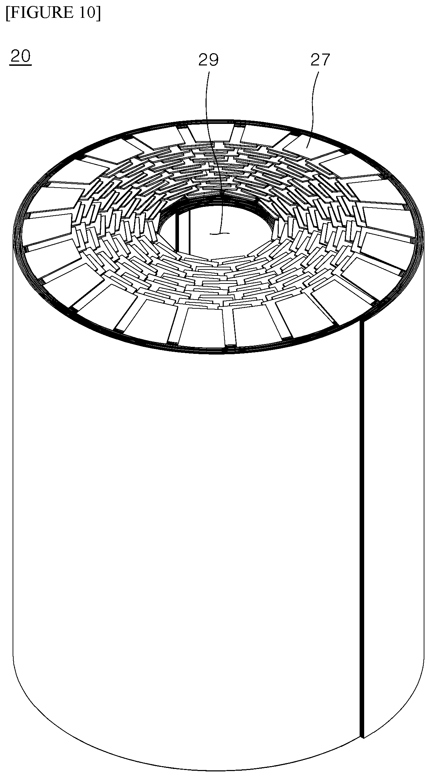

In the jelly-roll type electrode assembly 20, the notched tab 27 may be bent in the radial direction and flattened as shown in FIG. 10. The notched tab 27 may be bent radially inward or radially outward. In the embodiment, exemplified is a structure with the notched tabs 27 bent radially inward.

The notched tabs 27 may be bent one by one during the process of forming the jelly-roll type electrode assembly 20 by winding the laminate. Alternatively, the notched tabs 27 may be bent all at once after the jelly-roll type electrode assembly is formed by winding the laminate.

The notched tabs 27 of the first electrode 21 and the notched tabs 27 of the second electrode 22 that are folded and overlapped in the radial direction may provide planes substantially perpendicular to the axial direction at two axial ends of the electrode assembly 20, respectively.

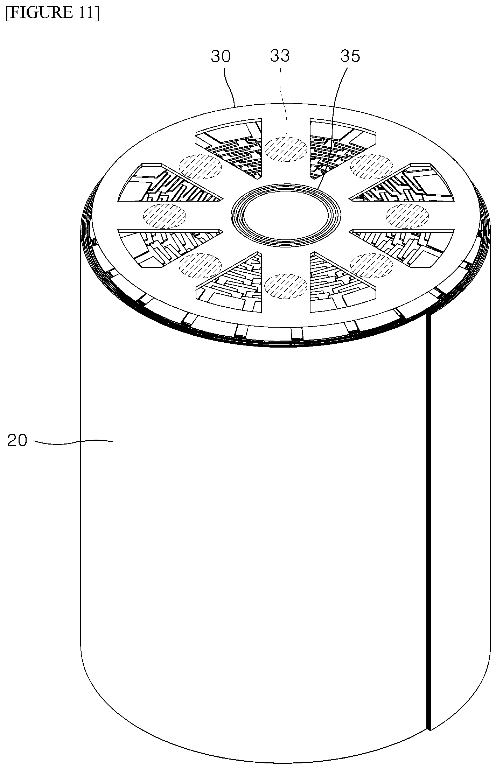

As shown in FIGS. 11 to 15, the current collecting plates 30 and 40 may be bonded to the substantially flat surfaces provided by the notched tabs 27 exposed at the axial end of the electrode assembly 20.

The first current collecting plate 30 is bonded to the one axial end, i.e., the bottom, of the electrode assembly 20. Such bonding may be established, for example, by irradiating the surface of the first current collecting plate 30 with a laser to weld the back surface of the first current collecting plate 30 to the electrode tab 27.

The first current collecting plate 30 may be bonded to the electrode tab 27 of the first electrode 21 of the electrode assembly 20 to be electrically connected to the first electrode.

In the embodiment, the first current collecting plate 30 is an anode current collecting plate. However, the first current collecting plate 30 may be a cathode current collecting plate.

In the embodiment, the first current collecting plate 30 may include aluminum material. However, the first current collecting plate 30 may include copper material. That is, the material of the current collecting plate is not limited thereto.

The second current collecting plate 40 is bonded to the other axial end, i.e., the upper portion, of the electrode assembly 20. Such bonding may be established, for example, by irradiating the surface of the second current collecting plate 40 with a laser to weld the back surface of the second current collecting plate 40 to the electrode tab 27.

The second current collecting plate 40 may be bonded to the electrode tab 27 of the second electrode 22 of the electrode assembly 20 to be electrically connected to the second electrode.

In the embodiment, the second current collecting plate 40 is a cathode current collecting plate. However, the second current collecting plate 40 may be an anode current collecting plate.

In the embodiment, the second current collecting plate 40 may include copper material. However, the second current collecting plate 40 may include aluminum material. That is, the material of the current collecting plate is not limited thereto.

The current collecting plates 30 and 40 may be manufactured by punching, trimming, piercing and bending a metal sheet.

The can 10 includes a bottom member 12, a sidewall member 11 extending axially and connected to the bottom member 12, and a cap 17 covering the open end of the sidewall member 11.

The bottom member 12 may have a disk shape, and the side wall member 11 may have a circular tube shape.

The bottom member 12 and the side wall member 11 may be manufactured by subjecting a metal sheet with nickel plated on the surface of steel to deep drawing, and trimming the front end of the side wall member 11 with a punch while holding the same with a blank holder. Apparently, the material of the can 10 is not limited thereto.

The bottom member 12 has a disc shape with a hole provided in the center.

A first electrode terminal 13 may be fitted into the hole. The first electrode terminal 13 may be riveted and fixed to the bottom member 12 with a gasket 14 interposed therebetween. The gasket 14 is interposed between the first electrode terminal 13 and the bottom member 12, sealing the can 10 to prevent electrolyte leakage and electrically insulate the first electrode terminal 13 from the bottom member 12.

However, the connection method between the first electrode terminal 13 and the bottom member 12 is not limited thereto. For example, as long as the structure seals the space between and electrically insulate the first electrode terminal 13 and the bottom member 12, various other fixing methods such as bolt-and-nut joints, glass seals, or chrome coating and PP-MAH thermal bonding may also be applied.

The first electrode terminal 13 may have first polarity, and the can 10 may have second polarity. That is, both the bottom member 12 of the can 10 and the sidewall member 11 connected thereto may have second polarity.

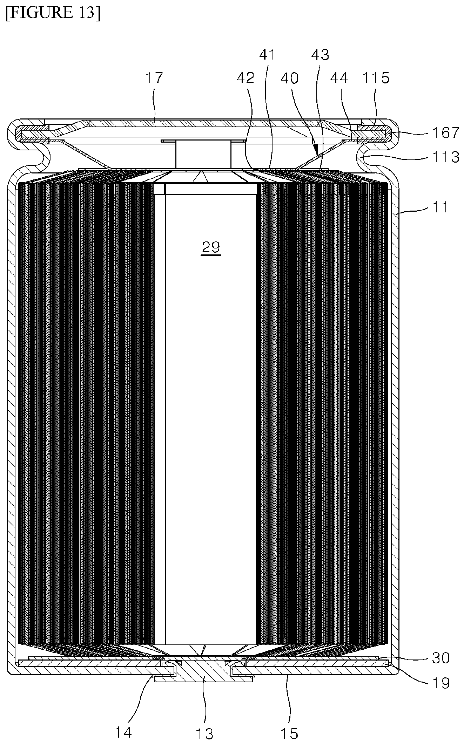

Accordingly, the battery cell may have both the first electrode terminal 13 and the second electrode terminal 15 located at the axial end, i.e., the closed end, provided with the bottom member 12, as illustrated in FIG. 13. As a result, the battery cell may have both the bus bar connected to the first electrode terminal 13 and the bus bar connected to the second electrode terminal 15 located at the upper portion of the battery cell.

In one embodiment, the first electrode terminal 13 may be the anode terminal, and the second electrode terminal 15 may be the cathode terminal, or vice versa.

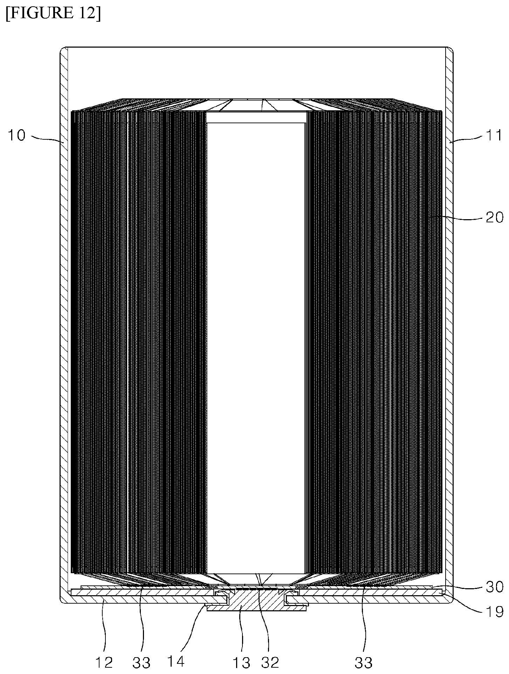

Referring to FIG. 12, the electrode assembly 20 may be accommodated in the can 10 with the first current collector plate 30 facing the bottom 12 of the can 10. The electrode assembly 20 is accommodated in the can 10 with the first current collector plate 30 aligned to face the bottom member 12 of the can 10. As a result, the first area 311 of the first current collector plate 30 faces and is in contact with the first electrode terminal 13 installed at the bottom member 12. Meanwhile, an insulator 19 is interposed between the second area 312 of the first current collector plate 30 and the bottom member 12 of the can 10 so as to electrically insulate the first current collector plate 30 from the bottom member 12.

The terminal joint 31 of the first area 311 of the first current collector plate 30 is bonded to the first electrode terminal 13 fixed to the bottom 12 by resistance welding, ultrasonic welding, laser welding or other methods. The welding device for welding the first current collector plate 30 to the first electrode terminal 13 may approach the back surface of the center of the terminal joint 31 of the first current collector plate 30 through the core hollow portion 29 of the electrode assembly 20 from the open end of the can 10 to perform welding. Apparently, in addition, the first current collector plate 30 and the first electrode terminal 13 may also be bonded by brazing or soldering. That is, various methods may be applied to the first current collector plate 30 and the first electrode terminal 13 as long as the first current collector plate 30 and the first electrode terminal 13 may be electrically connected and fixed to each other.

Referring to FIG. 13, the second collector plate 40 includes: an inner ring part 41 that defines a hole 42 corresponding to the core hollow portion 29 of the electrode assembly 20 and surrounds the core hollow portion; an electrode connecting portion 43 extending radially from the inner ring part 41, and a can connecting portion 44 positioned distally relative to the electrode tab connecting portion 43 and connected to the inner ring part 41.

FIGS. 12 and 13 illustrate insertion of the electrode assembly 20 into the can 10 without the second collector plate 40 bonded to the electrode assembly 20. However, it is also possible to first insert the electrode assembly 20 into the can 10 with the second collector plate 40 bonded to the electrode assembly 20.

With the electrode assembly 20 accommodated in the can 10, the electrode tab 27 of the second electrode 22 and the second collector plate 40 are arranged so as to face the open end of the sidewall member 11.

With the electrode assembly 20 accommodated in the can 10, the end of the sidewall member 11 of the can 10 may be recessed inward to form a beading 113. Furthermore, welding may be performed with the can connecting portion 44 of the second collector plate 40 in contact with the beading 113.

After the electrolyte is injected into the can 10, the cap 17 provided with a vent structure may be placed over the beading 113 and the upper end portion of the side wall member 11 is crimped radially inward to press the edge of the cap 17 to cover the open end of the can 10. Here, a gasket 167 may be interposed between the beading 113 and crimped portion 115 of the sidewall member 11 and the cap 17, thereby forming an insulating seal. Accordingly, the cap 17may not have a polarity.

The first current collecting plate 30 may be a bottom-side current collecting plate facing the bottom 12 of the can 10, and the second collector plate 40 may be an open-end-side current collecting plate facing the open end of the can 10.

### [BATTERY CELL-SECOND EMBODIMENT]

The first current collector plate 30 described above may be applied not only to the battery cell according to the first embodiment, but also to the battery cell according to a second embodiment, which will be described later.

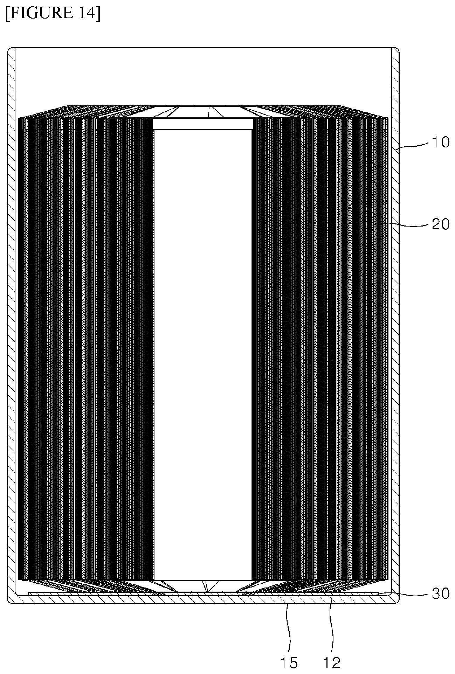

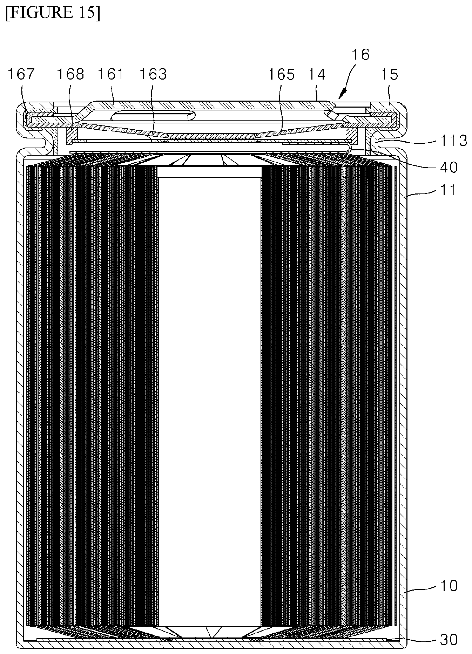

Hereinafter, a cylindrical battery cell according to the second embodiment of the present invention will be described with reference to FIGS. 14 and 15. In the description, any description overlapping with that of the first embodiment will be omitted.

In the second embodiment, the bottom member 12 of the can 10 itself constitutes the second electrode terminal 15, and the first electrode terminal 13 is constituted by the cap assembly 16.

The first current collecting plate 30 may be bonded to the electrode tab 27 of the first electrode 21 of the electrode assembly 20 to be electrically connected to the first electrode.

In the embodiment, the first electrode is a cathode and the first current collector plate 30 is a cathode current collecting plate. However, the first electrode may be an anode and the first current collector plate 30 may be an anode current collecting plate.

In the embodiment, the first current collecting plate 30 may include copper material. However, the first current collecting plate 30 may include aluminum material. That is, the material of the current collecting plate is not limited thereto.

The second current collecting plate 40 may be bonded to the electrode tab 27 of the second electrode 22 of the electrode assembly 20 to be electrically connected to the second electrode.

In the embodiment, the second electrode is an anode and the second current collector plate 40 is an anode current collecting plate. However, the second electrode may be a cathode and the second current collector plate 40 may be a cathode current collecting plate.

In the embodiment, the second current collecting plate 40 may include aluminum material. However, the second current collecting plate 40 may include copper material. That is, the material of the current collecting plate is not limited thereto.

Referring to FIG. 14, the electrode assembly 20 may be accommodated in the can 10 with the first current collector plate 30 facing the bottom 12 of the can 10. The electrode assembly 20 is accommodated in the can 10 with the first current collector plate 30 aligned to face the bottom member 12 of the can 10. As a result, the first area 311 of the first current collector plate 30 faces and is in contact with the center of the bottom member 12.

The first area 311 of the first current collector plate 30 and the bottom member 12 may be welded. The welding may be achieved by a laser welding method in which a laser is irradiated from the outside of the bottom member 12 of the can or a laser is irradiated to the second surface 318 of the first area 311 of the first current collector plate 30. In addition, various other welding methods, such as resistance welding or ultrasonic welding, may also be applied.

Referring to FIG. 15, after welding the first current collector plate 30 and the can 10, a beading 113 may be formed at the end of the side wall member 11. The other axial end of the electrode assembly 20 and the cap assembly 16 may be electrically connected via the second current collector plate 40. Accordingly, the second electrode 22 of the electrode assembly 20 may be electrically connected to the electrode terminal 161 of the cap assembly 16 via the second current collector plate 40.

Preferably, the cap assembly 16 may further include a current interrupting disk (CID) 165. One end of the second current collector plate 40 may be bonded to the electrode tab 27 of the electrode assembly 20, and the other end may be bonded to the current interrupting disk 165 of the cap assembly 16.

Preferably, the cap assembly 16 may further include a vent 163 having a center bonded and electrically connected to the current interrupting disk 165.

Preferably, the cap assembly 16 may further include an insulating spacer 168 that insulates and separates the periphery of the current interrupting disk 165 from the vent 163.

The edge of the vent 163 and the edge of the electrode terminal 161 overlap in the axial direction and are placed on the beading 113. The edge of the vent 163 and the edge of the electrode terminal 161 are fixed by the beading 113 and the crimped portion 115 in sealing manner.

The edge of the vent 163 and the edge of the electrode terminal 161 are fixed in sealing manner with a gasket 167 interposed therebetween, and the can 10 and the cap assembly 16 are electrically insulated from each other by the gasket 167.

Referring to FIG. 15, the can 10 of the cylindrical battery cell has a first polarity corresponding to that of the first electrode 21 of the electrode assembly 20, and the electrode terminal 161 is disposed at the upper center of the cylindrical battery cell and has a second polarity corresponding to that of the second electrode 22 of the electrode assembly 20.

The notches 35 and 36 provided in the boundary area 315 of the first current collector plate 30 according to the embodiment described above allow for relative axial and radial positional changes of the terminal joint 31 with respect to the electrode joint 33.

The boundary area 315 is disposed along a path through which vibration or external shock applied to the can 10 is transmitted to the electrode joint 33 via the terminal joint 31. The boundary area is naturally and elastically deformed by the notches 35 and 36 in response to the vibration or shock. Accordingly, the magnitude of tensile or compressive stress repeatedly and continuously applied to the connection between the terminal joint 31 and the electrode joint 33 may be minimized.

In the embodiment, a cylindrical battery cell is exemplified. However, the battery cell is not necessarily cylindrical.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A current collecting plate comprising:
a plate body having a first surface and a second surface that are opposite to each other;
a first area of the plate body comprising a terminal joint where the first surface is bonded to a cap, a can bottom or an electrode terminal;
a second area of the plate body surrounding the first area and comprising an electrode joint where the second surface is bonded to an electrode tab of an electrode assembly; and
first and second notches provided at the first and second surfaces, respectively, at a boundary area between the first and second areas.

2. The current collecting plate of claim 1, wherein the first notch extends in a closed loop shape to surround the first area.

3. The current collecting plate of claim 1, wherein the second notch extends in a closed loop shape to surround the first area.

4. The current collecting plate of claim 1, wherein the first and second notches are alternately arranged along a direction approaching from one of the first and second areas toward the other of the first and second areas.

5. The current collecting plate of claim 1, wherein a widthwise centers of the first notch and a widthwise centers of the second notch are alternately arranged along a direction approaching from one of the first and second areas toward the other of the first and second areas.

6. The current collecting plate of claim 1, wherein a most deeply recessed bottom of the first notch and a most deeply recessed bottom of the second notch are alternately arranged along a direction approaching from one of the first and second areas toward the other of the first and second areas.

7. The current collecting plate of any one of claims 4 to 6, wherein a shortest distance between first and second inner surfaces defining first and second notches adjacent along the direction, respectively, is less than a thickness of the plate body.

8. The current collecting plate of any one of claims 4 to 6, wherein first and second notches adjacent along the direction partially overlap each other when viewed in thicknesswise direction of the plate body.

9. The current collecting plate of claim 1, wherein a cross-sectional shape of a first inner surface defining the first notch when viewed in an extending direction of the first notch is substantially triangular, trapezoidal, semicircular or round.

10. The current collecting plate of claim 1, wherein a cross-sectional shape of a second inner surface defining the second notch when viewed in an extending direction of the second notch is substantially triangular, trapezoidal, semicircular or round.

11. The current collecting plate of claim 1, wherein a width of the first notch gradually decreases in depthwise direction.

12. The current collecting plate of claim 1, wherein a width of the second notch gradually decreases in depthwise direction.

13. The current collecting plate of claim 1, wherein the first notch and the second notch are arranged concentrically.

14. The current collecting plate of claim 1, wherein the plate body is substantially circular, and the first area is provided at a center of the plate body.

15. The current collecting plate of claim 1, wherein each of the first notch and the second notch is circular and surrounds the first area.

16. The current collecting plate of claim 1, wherein the second area is provided with a penetrating portion penetrating the plate body in thicknesswise direction.

17. The current collecting plate of claim 1, wherein the shortest current path between the terminal joint and the electrode joint is configured in a direction approaching from one of the first and second areas toward the other of the first and second areas.

18. The current collecting plate of claim 1, wherein the shortest current path between the terminal joint and the electrode joint is without a section extending from one of the first and second areas in a direction away from the other of the first and second areas.

19. A battery cell comprising:
a can provided with a bottom member and a side wall member;
an electrode assembly accommodated in the can;
a cap covering an open end of the can with the electrode assembly accommodated in the can;
an electrode terminal; and
a current collecting plate according to any one of claims 1 to 18 comprising: a first surface bonded to the cap, the bottom member of the can or the electrode terminal; and a second surface electrically connected to an electrode tab provided on one axial side of the electrode assembly.

20. The battery cell of claim 19, wherein the battery cell is cylindrical.

21. The battery cell of claim 19, wherein the electrode terminal is provided in the cap.

22. The battery cell of claim 19, wherein the electrode terminal is insulated from and fixed to the bottom member.
